# EUROPEAN PATENT SPECIFICATION

(11) **EP 3 035 832 B1**
(45) Date of publication and mention of the grant of the patent: **15.05.2019**
(21) Application number: 14772404.1
(22) Date of filing: 22.08.2014
(51) Int. Cl.: A47J 43/07

(54) **FOOD PROCESSOR ARRANGEMENT**
LEBENSMITTELVERARBEITUNGSANORDNUNG
SYSTÈME DE ROBOT CULINAIRE

(30) Priority: 22.08.2013 GB 201315006
(43) Date of publication of application: 29.06.2016
(73) Proprietor: Kenwood Limited, Havant, Hampshire PO9 2NH (GB)
(72) Inventor: PALMER, Paul, Havant Hampshire PO9 2NH (GB); SEALY, James Joseph, Havant Hampshire PO9 2NH (GB)
(74) Representative: Hector, Annabel Mary
(86) International application number: PCT/GB2014/052581
(87) International publication number: WO 2015/025176

(56) References cited:
- EP-A2- 2 599 415
- DE-A1- 3 546 506

## Description

This invention relates to food processor arrangements and in particular to cutter plate mounting means for use in such arrangements.

Cutter plates used for chopping or otherwise comminuting foodstuffs in the bowl of an electrically powered food processor typically comprise a blade-carrying disc mounted for rotation parallel to and just beneath the lid of a food processor bowl, close to a feed-tube entry through the lid. Typically, the cutter plate is supported on a shaft that sits on the central vertical axis of the bowl and carries a drive spindle by means of which the cutter plate is rotated rapidly to engage with and process foods pushed onto it through the feed-tube. The spindle picks up rotary drive from a motor, located in a base of the processor, through a coupling sealed into the bottom of the bowl. Usually the bowl sits directly on the base and the cutter comprises a fixed blade, which may be curved or straight and which is pressed out of, or attached to, a flat, metallic disc. The chopped food typically falls into the bowl through an aperture, formed between the disc and the blade.

Many cutter plate configurations have been utilised in such arrangements, and most work quite well, but none has proven entirely satisfactory in operation. In particular, difficulties arise in reliably maintaining manufacturing tolerances on lid-to-bowl fitments, for example, and on the central shafts which support the cutting disc, with a consequence that the plate may not be adequately located relative to the lid, permitting the formation of trapping regions, between the underside of the lid and the upper surface of the cutter plate, in which undesirably large amounts of food can tend to become trapped.

Moreover, when food is pushed downwards through the feed-tube, it is forced directly onto the outer edge of the cutter plate, which can tend to tilt the plate downwards and at an angle which can be sufficiently large to cause the cutter plate to impact the bottom of the feed-tube (inside the lid). In extreme cases, this can liberate plastic shavings, which is of course undesirable.

DE3546506 shows a kitchen appliance driven by an electric motor comprising an input shaft and an implement shaft which can be brought into engagement via a dog clutch.

It is an object of the invention to reduce or overcome the above mentioned difficulties.

According to the invention there is provided a food processor arrangement comprising a food processor bowl, a lid for the bowl and a drive shaft supported upright in the bowl; the drive shaft supporting a discoidal cutter plate for rotation beneath the lid on an annular register; wherein an outside diameter of the annular register lies in a range from 20% to 30% of the diameter of the cutter plate, and a thickness of the annular register is configured to separate the cutter plate from the lid during food-processing; the arrangement further comprising resilient means for urging the cutter plate towards the lid, the annular register providing a spacing between the cutter plate and the lid.

By this means, the plate is stably mounted relative to the lid and a tendency for food, pushed down onto the cutter plate through the lid, to tiltingly displace the cutter plate is resisted, thereby tending to maintain alignment of the cutter plate with the lid.

In some preferred embodiments of the invention, the outside diameter of said annular register lies in a range from 23% to 27% of the diameter of the cutter plate. The register may comprise upper and lower register portions, the upper register portion being attached to the lid, and the lower register portion being attached to the cutter plate.

The cutter plate may have an annular register attached to each opposing major surface of the cutter plate.

In some embodiments of the invention, the drive shaft is hollowed and comprises first and second relatively telescopic parts.

In such embodiments, it is preferred that the resilient means comprises a spring mounted within said hollowed drive shaft and mounted to bear against respective fixed components in each of said parts, thereby tending to urge said parts away from one another and to extend the length of said drive shaft.

In order that the invention may be clearly understood and readily carried into effect, one embodiment thereof will now be described, by way of example only, with reference to the accompanying drawings, of which:
Figure 1 shows, in perspective and exploded view, components of a typical prior art food processor; and
Figure 2 shows, in exploded view, components of a food processor in accordance with one embodiment of this invention.

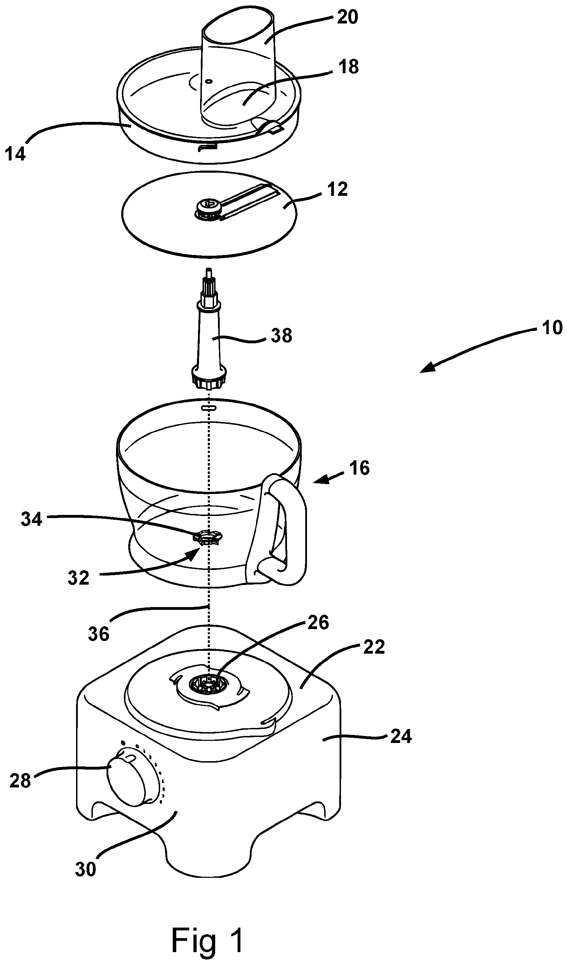

Referring now to Figure 1, a food processor arrangement 10 includes a cutter plate 12 in the form of a disc which carries one or more blades and which, in use, is mounted for rotation closely beneath the lid 14 of a bowl 16. The lid 14 has an aperture 18 therein, and carries a feed-tube 20, through which foodstuffs to be processed can be introduced into the bowl 16, and urged into contact with the cutter plate 12 for processing thereby. The feed-tube 20 is located over said aperture 18, so that foodstuffs can be introduced into the bowl through the tube 20. Typically, a pusher device is provided, for insertion into the feed-tube 20, thereby allowing a user to urge foodstuffs firmly against the plate 12.

The bowl 16 is supported for operation upon an upper surface 22 of a base 24 which contains an electric motor (not shown) and typically presents a dual coaxial drive outlet 26, coupled to the motor, on its bowl-supporting surface 22. The coaxial drives presented at the outlet 26 run at different speeds, and a typical speed ratio between the two is 3:1 though of course other ratios can be used if preferred.

The speed of the motor and its mode of operation (e.g. continuous or pulsed) is, in this example, controllable by means of a rotatable knob 28 on one of the upright surfaces 30 of the base 24 but it will be appreciated that any convenient form of control can be used. In particular, press-button or touch controls, or even remote controls, may be used and any directly actuated control provided may, if desired, be supplemented with a remote control facility.

The bottom of the bowl 16 is centrally apertured, as shown at 32, allowing access to the drive outlet 26 on the base 24, and is further, in known manner, with a sealed drive coupling that transmits the drive from the outlet 26 directly to a drive socket 34, within the bowl 16, which is aligned with the central axis 36 of the bowl 16. A drive shaft 38 which, in use, engages the drive socket 34, extends along the axis 36 and thus centrally of the bowl 16 to a location, close to the underside of the lid 14, where it supports and drives the cutter plate 12.

The blades on current cutter plates such as 12 can take varying configurations, including concave, straight and convex with reference to the direction of rotation. The blades may also be set at a tangent to the outer edge of the cutting disk or angled in either direction. In any event, the intention is to have the blade act upon the foodstuffs so as to impart a slicing or chopping action, the nature and efficiency of which is governed, among other things, by the angle at which the blade attacks the foodstuff and the diameter at which the foodstuff encounters the blade. The plate 12 is typically apertured, near the blade, so that sliced foodstuffs can fall through the aperture and into the bowl 16.

Typically, in current designs, the cutter plate 12 is around 180mm in diameter, but is supported only by a small (5mm) shaft and its rotation is controlled by a circular land area of 10.5mm diameter. This land area is defined by opposing surfaces of an annular feature formed at the centre of the cutter plate 12 and a bush in the lid, into and through which the top end of the shaft 38 engages, thereby providing an upper seating which controls the top end of the shaft 38 during rotation; the intention of this arrangement being to firmly hold the shaft 38 upright and to maintain it in alignment with the central axis 36 of the bowl 16. With such an arrangement, it will be appreciated that the diameter of the land area mentioned above is less than 6% of that of the cutter plate 12.

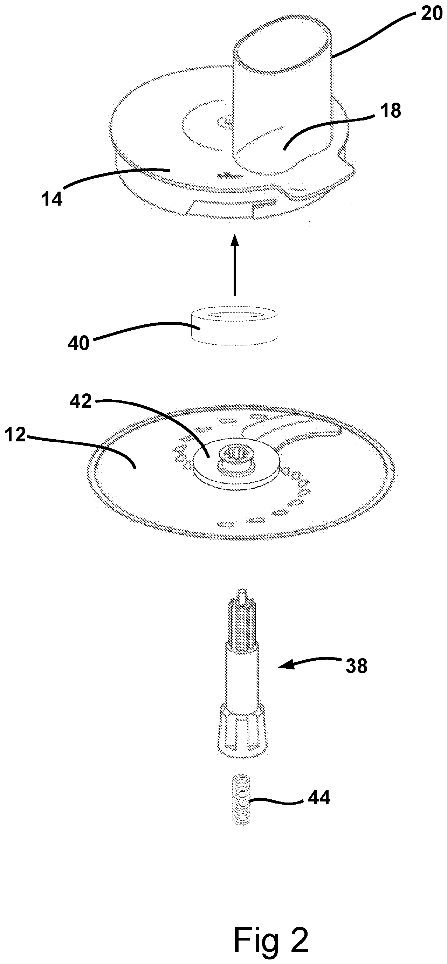

In one preferred embodiment of the present invention, as shown in Figure 2, the aforementioned land area is increased from 10.5mm to 48mm diameter, which is more than 26% of the diameter of the cutter plate 12. The larger diameter facing surfaces are implemented by means of a two-part blade register, with one part of the register (40) being carried by the lid 14, and the other part (42) carried by the cutter plate 12.

The part 40 of the blade register that is carried by the underside of the lid 14 is mounted onto the centre bush and is 13.5mm thick and, in this example, 48mm in diameter.

The other part 42 of the blade register, which is carried by the central hub of the cutting plate, is arranged in this example to protrude above the cutting blades by at least 0.75mm, and is 48mm in diameter, thus preventing them from hitting the internal plastic feeder tube area.

This has the effect of stabilising the cutter plate, allowing it to remain horizontal, even when the food is pushed against it through the feed-tube, and moreover providing a stable and controllable spacing between the cutter plate 12 and the lid 14, which can therefore be set at a level which discourages the entrapment of foodstuffs.

Although the above-described embodiment of the invention provides an annular land area of diameter around 26% of that of the cutter plate, it will be appreciated that the actual dimensions of the land area can differ for different food processor bowl and cutter plate configurations. In general therefore, in other embodiments of the invention, the diameter of the aforementioned annular land area used is in the range from 20% to 30% of the diameter of the cutter plate, with a particularly preferred range extending from 23% to 27% of the cutter plate diameter.

The increased land area used in accordance with the invention significantly improves the stability of the cutter plate during operation. In addition, however, the drive shaft 38 is preferably fitted with a spring 44, located and configured to urge the cutter plate 12 upwards, thus pushing the plate 12 firmly but resiliently against the blade register. The spring 44 is supported on an annular ledge or a full floor formed inside the drive shaft 38, and the shaft 38 is formed of two telescopically joined parts; there being a shoulder formed on the upper part against which the spring 44 can push to resiliently urge the upper part of the shaft upwards relative to the lower part of the shaft, thereby pushing the cutter plate resiliently against its seating formed by the register parts 40 and 42.

It will be appreciated that the resilient urge may be applied by any chosen means and in any convenient manner. In any event, the spring-loaded cutter plate 12 and the enlarged area of registry between the plate 12 and the lid 14 combine to provide a stable and well-controlled mounting arrangement for the cutter plate which, compared to existing arrangements, is less likely to collide with the bottom of the feed-tube 20, and is less prone to entrap foodstuffs.

It will be further appreciated that at least the facing surfaces of the register parts 40 and 42 need to be formed of or treated with materials suitable to provide them with hard-wearing and low-friction, generally bearing-like characteristics. Moreover, particularly if the cutter plate 12 is intended to be reversible, it is preferred to provide an additional register part (not shown, but identical to the part 42) on the second major surface of the plate; thereby forming in effect a thickened annular boss which provides the same degree of stability however the plate is mounted for use.

It will be understood that the present invention has been described above purely by way of example, and modifications of detail can be made within the scope of the claims.

Reference numerals appearing in the claims are by way of illustration only and shall have no limiting effect on the scope of the claims.

## Claims

1. A food processor arrangement comprising a food processor bowl, a lid (14) for the bowl and a drive shaft (38) supported upright in the bowl; the drive shaft supporting a discoidal cutter plate (12) for rotation beneath the lid on an annular register (40, 42); wherein an outside diameter of the annular register lies in a range from 20% to 30% of the diameter of the cutter plate, and a thickness of the annular register is configured to separate the cutter plate from the lid during food-processing; the arrangement further comprising resilient means (44) for urging the cutter plate towards the lid, the annular register providing a spacing between the cutter plate and the lid.

2. An arrangement according to claim 1, wherein the outside diameter of said annular register lies in a range from 23% to 27% of the diameter of the cutter plate.

3. An arrangement according to claim 1, wherein the annular register comprises upper and lower register portions, the upper register portion (40) being attached to the lid, and the lower register portion (42) being attached to the cutter plate.

4. An arrangement according to claim 1, wherein the cutter plate has an annular register attached to each opposing major surface of the cutter plate.

5. An arrangement according to claim 1 or claim 2, wherein the drive shaft is hollowed and comprises first and second relatively telescopic parts.

6. An arrangement according to claim 5, wherein the resilient means comprises a spring disposed within said hollowed drive shaft and mounted to bear against respective fixed components in each of said parts, thereby tending to urge said parts away from one another and to extend the length of said drive shaft.

## Patentansprüche

1. Küchenmaschinenanordnung, die eine Küchenmaschinenschüssel, einen Deckel (14) für die Schüssel und eine Antriebswelle (38), die aufrecht in der Schüssel getragen wird, umfasst; wobei die Antriebswelle eine scheibenförmige Schneidplatte (12) zur Drehung unter dem Deckel auf einem kreisförmigen Aufsatz (40, 42) trägt; wobei ein Außendurchmesser des ringförmigen Aufsatzes in einem Bereich von 20 % bis 30 % des Durchmessers der Schneidplatte liegt und eine Dicke des ringförmigen Aufsatzes dazu konfiguriert ist, die Schneidplatte während der Lebensmittelverarbeitung von dem Deckel zu trennen; wobei die Anordnung weiterhin ein federndes Mittel (44) zum Treiben der Schneidplatte in Richtung des Deckels umfasst, wobei der ringförmige Aufsatz einen Abstand zwischen der Schneidplatte und dem Deckel bereitstellt.

2. Anordnung nach Anspruch 1, wobei der Außendurchmesser des ringförmigen Aufsatzes in einem Bereich von 23 % bis 27 % des Durchmessers der Schneidplatte liegt.

3. Anordnung nach Anspruch 1, wobei der ringförmige Aufsatz ein oberes und ein unteres Aufsatzteil umfasst, wobei das obere Aufsatzteil (40) an dem Deckel angebracht ist und das untere Aufsatzteil (42) an der Schneidplatte angebracht ist.

4. Anordnung nach Anspruch 1, wobei die Schneidplatte einen ringförmigen Aufsatz aufweist, der an jeder entgegengesetzten Hauptfläche der Schneidplatte angebracht ist.

5. Anordnung nach Anspruch 1 oder 2, wobei die Antriebswelle ausgehöhlt ist und ein erstes bzw. ein zweites teleskopisches Teil umfasst.

6. Anordnung nach Anspruch 5, wobei das federnde Mittel eine Feder umfasst, die innerhalb der ausgehöhlten Antriebswelle angeordnet ist und dazu montiert ist, gegen jeweilige feststehende Bauteile in jedem der Teile zu drücken, wodurch sie dazu neigt, die Teile voneinander weg zu treiben und die Länge der Antriebswelle zu verlängern.

## Revendications

1. Agencement de robot culinaire comprenant un bol de robot culinaire, un couvercle (14) pour le bol et un arbre d'entraînement (38) supporté verticalement dans le bol ; l'arbre d'entraînement supportant une plaque de coupe discoïde (12) destinée à tourner sous le couvercle sur un registre annulaire (40, 42) ; dans lequel un diamètre extérieur du registre annulaire se situe dans une plage allant de 20 % à 30 % du diamètre de la plaque de coupe, et une épaisseur du registre annulaire est configurée pour séparer la plaque de coupe du couvercle pendant le traitement des aliments; l'agencement comprenant en outre un moyen élastique (44) pour pousser la plaque de coupe vers le couvercle, le registre annulaire fournissant un espacement entre la plaque de coupe et le couvercle.

2. Agencement selon la revendication 1, dans lequel le diamètre extérieur dudit registre annulaire se situe dans une plage allant 23 % à 27 % du diamètre de la plaque de coupe.

3. Agencement selon la revendication 1, dans lequel le registre annulaire comprend des parties de registre supérieure et inférieure, la partie de registre supérieure (40) étant fixée au couvercle et la partie de registre inférieure (42) étant fixée à la plaque de coupe.

4. Agencement selon la revendication 1, dans lequel la plaque de coupe comporte un registre annulaire fixé à chaque surface principale opposée de la plaque de coupe.

5. Agencement selon la revendication 1 ou la revendication 2, dans lequel l'arbre d'entraînement est creux et comprend de première et seconde parties relativement télescopiques.

6. Agencement selon la revendication 5, dans lequel le moyen élastique comprend un ressort disposé à l'intérieur dudit arbre d'entraînement creux et monté pour venir en appui contre des composants fixes respectifs dans chacune desdites parties, tendant ainsi à éloigner lesdites parties l'une de l'autre et à s'étendre sur la longueur dudit arbre d'entraînement.
